# EUROPÄISCHE PATENTSCHRIFT

(11) **EP 1 940 659 B1**
(45) Veröffentlichungstag und Bekanntmachung des Hinweises auf die Patenterteilung: **08.02.2012**
(21) Anmeldenummer: 06807124.0
(22) Anmeldetag: 10.10.2006
(51) Int. Cl.: B60S 1/08, B60S 1/20

(54) **LINEARWISCHERANLAGE FÜR EIN KRAFTFAHRZEUG**
LINEAR WIPER SYSTEM FOR A MOTOR VEHICLE
ENSEMBLE ESSUIE-GLACE A BALAYAGE LINEAIRE POUR UN VEHICULE

(30) Priorität: 10.10.2005 DE 102005048343
(43) Veröffentlichungstag der Anmeldung: 09.07.2008
(73) Patentinhaber: ROBERT BOSCH GMBH, 70442 Stuttgart (DE)
(72) Erfinder: ZIMMER, Joachim, 77880 Sasbach (DE)
(86) Internationale Anmeldenummer: PCT/EP2006/067242
(87) Internationale Veröffentlichungsnummer: WO 2007/042515

(56) Entgegenhaltungen:
- EP-A2- 1 449 728
- WO-A-95/27641
- US-A- 5 225 752
- US-A1- 2005 210 617

## Beschreibung

### Stand der Technik

Die Erfindung betrifft eine Linearwischeranlage für ein Kraftfahrzeug, mit einem Einhebelwischer, der von einem Motor horizontal auf der Windschutzscheibe zwischen einer fahrerseitigen und einer beifahrerseitigen Umkehrlage hin- und herbewegbar ist.

Moderne Scheibenwischvorrichtungen weisen typischerweise eine elektronische Steuerung auf, die vielfältige Funktionen zu erfüllen hat. Zum einen sind die Wischsysteme meist mit mehreren Wischerstufen für Intervallbetrieb und verschiedenen Geschwindigkeitsstufen (insbesondere I und II, ggf. III) für den Dauerbetrieb ausgelegt, wobei auch eine Intervallsteuerung mit zwei Intervallparklagen vorgesehen sein kann. Zum anderen erfordern Reversiermotoren, die aufgrund ihrer Vorteile zunehmend eingesetzt werden, anders als die konventionellen Rundläufermotoren grundsätzlich eine elektronische Steuerung beziehungsweise Regelung, um an den Umkehrlagen die Signale zur Umkehr der Bewegungsrichtung des Reversiermotors zu erzeugen. Dabei ist es zur Erzeugung eines harmonischen Wischablaufs auch bekannt, im Steuergerät eine sinusförmige Steuerkennlinie v(t) abzuspeichern.

Während elektronisch geregelte Reversierantriebe für Gegen-und Gleichlaufwischsysteme bereits eingesetzt werden, bestehen für so genannte Linearwischeranlagen noch Realisierungsschwierigkeiten. Aus der DE 195 01 984 A1 ist eine Linearwischeranlage bekannt, die von der gegenwärtigen Unmöglichkeit ausgeht, einen Linear-Einhebelwischer zu realisieren, da das sehr große Wischfeld mit den verfügbaren Wischfrequenzen bzw. -geschwindigkeiten nicht ausreichend gewischt werden kann. Die genannte Offenlegungsschrift schlägt deshalb einen Zweihebelwischer vor, wobei der weiter innenliegende Wischer mit größerer Geschwindigkeit und über eine größere Wegstrecke bewegbar ist als der fahrerseitige Wischer.

Hinsichtlich konventioneller Scheibenwischanlagen denken einige Fahrzeughersteller aufgrund von Endkundenanforderungen darüber nach, die (Dauerbetriebs-)Wischergeschwindigkeiten in den Stufen I und II anzuheben. Insbesondere für die Stufe II wird die Erhöhung der Wischergeschwindigkeit offenbar deshalb gefordert, um dem Fahrer bei starkem Regen das Sichtfeld länger freizuhalten.

Zur Umsetzung dieses Endkundenwunsches könnte zunächst einfach daran gedacht werden, im Wischsystem eine Erhöhung von beispielsweise zehn Wischfrequenzen pro Minute in Stufe II zu implementieren. Die Erhöhung der Wischfrequenzen ist jedoch problematisch, da sich die dynamische Belastung des Wischsystems erhöht und daraus ein erhöhter Verschleiß aller Lagerstellen bei unveränderten mechanischen Bauteilen resultiert. Um die Verschleißzunahme zu kompensieren, müssten die Lagerstellen solider und damit aufwändiger ausgelegt werden.

Die Erhöhung der Wischfrequenzen widerspricht außerdem einem zweiten Endkundenwunsch, nämlich dem Wunsch nach möglichst geräuscharmem Lauf der Wischeranlage. Die Erhöhung der Drehzahl hat aber ein schnelleres Durchlaufen beider Wendelagen und damit eine stärkere Geräuschentwicklung zur Folge.

Mit Blick auf die Motoren erscheint eine Drehzahlerhöhung zwar bei Rundläufer-Wischermotoren grundsätzlich machbar. Bei Reversiermotoren allerdings ist eine Drehzahlerhöhung durchaus problematisch, da durch das häufigere Reversieren mehr Energie in die jeweiligen Umkehrvorgänge gesteckt werden muss. Dadurch ist die Temperaturentwicklung des Reversiermotors unzulässig hoch, wodurch beispielsweise die Verzahnung bezüglich Dauerfestigkeit kritisch und damit unzulässig ist Außerdem kann bei zu häufigem Reversieren ein harmonischer Wischablauf nicht dargestellt werden.

Ferner ist aus der EP 1449 728 A2 eine Reduzierung der Verfahrgeschwindigkeit einer Scheibenwischanlage während des Reinigungsvorganges. Die US 5,225,752 zeigt eine Verfahrgeschwindigkeit einer Scheibenwischanlage mit einer oberen und einer unteren Umkehrlage deren Maximum der Verfahrgeschwindigkeit in weniger als der Hälfte der Zeit erreicht wird, die benötigt wird, um den Wischer von der unteren .Umkehrlage zur oberen zu verfahren. Ferner zeigen die WO 95/27641 und die US 2005/0210617 A1 Linearwischeranlagen.

Aufgabe der Erfindung ist es daher, mindestens das Fahrersichtfeld bei starkem Regen länger als bisher freizuhalten, ohne die beschriebenen Nachteile in vollem Maße in Kauf nehmen zu müssen. Insbesondere soll eine Umsetzung auch bei Reversierantrieben möglich sein.

Diese Aufgabe wird erfindungsgemäß durch eine Linearwischeranlage gemäß Anspruch 1 gelöst. Vorteilhafte Ausgestaltungen sind in den Unteransprüchen gekennzeichnet.

Erfindungsgemäß ist mindestens für den fahrerseitigen Wischer ein Wischverlauf v(t) vorgebbar, dessen Maxima näher zur unteren als zur oberen Umkehrlage liegen, so dass der Wischer - bei höchstens gleichbleibender Wischfrequenz - ein vorgebbares oberes Segment des Wischfeldes langsamer und das restliche Wischfeld schneller als bei einem bezüglich der Umkehrlagen symmetrischen Wischverlauf durchläuft.

Die Grundidee der Erfindung beruht auf einer Analyse einer Wischperiode unter objektiven und subjektiven Gesichtspunkten, die weiter unten bei der Figurenbeschreibung noch näher erläutert wird. Im Ergebnis dieser Analyse ist es zielführend, eine - typischerweise ungefähr hälftige - Aufteilung des Fahrerwischfeldes in ein oberes Segment, das im Wesentlichen das gemäß gesetzlichen Vorschriften vorgegebene Hauptsichtfeld enthält, und in ein unteres Restwischfeld vorzunehmen und die Verweildauer beziehungsweise zeitliche Verfügbarkeit im oberen Segment durch Reduzierung der (durchschnittlichen) Wischgeschwindigkeit dort zu erhöhen und gleichzeitig die Wartezeit, also den Zeitraum, in welchem der Wischer nicht das obere Segment durchläuft, durch Erhöhung der Wischgeschwindigkeit im Restwischfeld zu reduzieren. Dadurch resultiert mindestens im fahrerseitigen Sichtfeld eine Optimierung der Wis,cherverfügbarkeit mittels der Wischverlaufs-Kennlinie v(t), deren Auslegung im Einzelnen insbesondere von der Anordnung des Hauptsichtfeldes auf der Windschutzscheibe abhängt. Die Reduzierung der Wischgeschwindigkeit im direkten Fahrersichtfeld führt nur dann zum gewünschten Effekt der verbesserten Wischerverfügbarkeit im oberen Segment, wenn gleichzeitig die Wischfrequenz nicht sinkt, was durch Erhöhung der Wischgeschwindigkeit im Restwischfeld erreicht wird. Letzteres führt darüber hinaus auch durch Verkürzung der Wartezeit zu einer objektiven Verbesserung der Wischerverfügbarkeit im relevanten Wischfeldsegment, wobei dies vorteilhafterweise ohne Erhöhung beziehungsweise bei Verringerung der Wischfrequenz erreicht werden kann.

Bei Zweimotoren-Gegenlaufsystemen ist es zwar bekannt, einen der Wischer aus seiner Parkposition heraus durch größere, aber kürzere Beschleunigung gegenüber dem anderen Wischer voreilen zu lassen. Da dabei ausschließlich die Kollisionsvermeidung der beiden gegenläufigen Wischer im kritischen, mittleren Wischwinkelbereich im Blick steht, wird der Wischverlauf so parametrisiert, dass von den Wischern zu bestimmten Zeiten die gewünschten, das heißt kollisionsvermeidenden Positionen erreicht werden. Eine Vorgabe des Wischverlaufs im Hinblick auf eine wischfeldbereichsorientierte Optimierung der Wischerverfügbarkeit spielt dabei keine Rolle.

Bezüglich des erfindungsgemäß hinsichtlich der Wischerverfügbarkeit bevorzugten, oberen Segments des Fahrersichtfelds wird demnach die Steigerung der zeitlichen Verfügbarkeit bei gleichzeitiger Verkürzung der Wartezeit erreicht. Außerdem resultiert erfindungsgemäß eine Wischqualitätsverbesserung im direkten Fahrersichtfeld. Weiter ergibt sich eine Reduzierung der Umlege-Geräusche in der oberen Umkehrlage sowie eine Verringerung der Tendenz zum Überwischen im Bereich der A- Säule.

Die erfindungsgemäße Wischverlaufs-Charakteristik ist bei Ein- und Zweihebel-Wischanlagen umsetzbar.

Gemäß einer Ausführungsform der Erfindung ist es, insbesondere bei etwa hälftiger Aufteilung der beiden Wischfeldsegmente, günstig, wenn die Maxima an einer Stelle zwischen den Umkehrlagen vorgegeben werden, die beim Aufwärtswischen von der unteren bis zur oberen Umkehrlage etwa nach 25-35% eines einem halben Wischzyklus entsprechenden Zeitintervalls erreicht wird.

Weiterhin ist der Wischer im Bereich der oberen Umkehrlage für eine vorgebbare Haltezeit vorteilhaft stillsetzbar. Durch diese Einführung einer zusätzlichen Pausen-Haltezeit in der oberen Umkehrlage beim Dauerwischen gelingt bezüglich des direkten Fahrersichtfelds eine Erhöhung der Verfügbarkeit sowie eine Harmonisierung des Wischvorgangs insgesamt durch die Angleichung der beiden 'Wartezeiten'.

Bei der Ausführungsform mit zusätzlicher Haltezeit ist es weiterhin vorteilhaft, die Höhe der Maxima im Wischverlauf v(t) zu erhöhen, um die Haltezeit zu kompensieren.

Bei allen Ausführungsformen ist es von Vorteil, dass in der Steuerung für mehrere Betriebsarten und/oder -stufen der Wischanlage jeweils_eine zugehörige Wischverlaufs-Kennlinie speicherbar ist, wobei mindestens für die höchste Dauerbetriebsstufe eine Kennlinie nach einem der Ansprüche 1 bis 4 vorgesehen ist.

Es ist von besonderem Vorteil, dass die Wischer von einem oder zwei Reversiermotoren antreibbar sind. Dies ermöglicht die Schonung des Wischermotors (Temperatur) durch Reduzieren von Reversiervorgängen und die Schonung des Wischsystems (Verschleiß) durch Reduzieren von Reversiervorgängen.

Die Aufgabe wird erfindungsgemäß auch durch eine Linearwischeranlage für ein Kraftfahrzeug gelöst, mit einem Einhebelwischer, der von einem Motor horizontal auf der Windschutzscheibe zwischen einer fahrerseitigen und einer beifahrerseitigen Umkehrlage hin- und herbewegbar ist, wobei mittels einer elektronischen Steuerung ein pendelnder Wischverlauf mit einer zeitabhängigen Wischgeschwindigkeit der Wischer gemäß einer glatten periodischen Funktion v(t), die zwischen den Umkehrlagen jeweils ein Maximum aufweist, vorgebbar ist, und wobei für den Wischer ein Wischverlauf v(t) vorgebbar ist, dessen Maxima näher zur beifahrerseitigen als zur fahrerseitigen Umkehrlage liegen, so dass der Wischer - bei höchstens gleichbleibender Wischfrequenz - ein vorgebbares fahrerseitiges Segment des Wischfeldes langsamer und das restliche Wischfeld schneller als bei einem bezüglich der Umkehrlagen symmetrischen Wischverlauf durchläuft. Bei dieser Linearwischeranlage wird der Wischer mit besonderem Vorteil von einem Rundläufermotor angetrieben.

Die Erfindung wird nachfolgend an Ausführungsbeispielen anhand der Zeichnungen näher erläutert. Es zeigt
Figur 1 die Anordnung der gesetzlichen Sichtfelder auf einer Windschutzscheibe,
Figur 2 ein Diagramm, das eine sinusförmige Wischverlaufs-Kennlinie gemäß dem Stand der Technik darstellt,
Figur 3 eine Darstellung der Aufteilung des Fahrerwischfelds in Wischfeld-Segmente,
Figur 4, in gleicher Darstellung wie Figur 2, eine erfindungsgemäße Wischverlaufs-Kennlinie,
Figur 5 die Wischverlaufs-Kennlinie gemäß Figur 4 mit im Bereich der oberen Umkehrlage zusätzlich eingeführter Haltezeit,
Figur 6 die Wischverlaufs-Kennlinie gemäß Figur 5 mit zusätzlicher Reduzierung des Wischwinkels in der unteren Umkehrlage,
Figur 7 die Anordnung des Fahrerwischfelds-Segments auf einer Windschutzscheibe mit Linear-Wischfeld,
Figur 8 die Anordnung des Restwischfelds auf der Windschutzscheibe gemäß Figur 7,
Figur 9 eine tabellarische Übersicht über beispielhafte Zeitangaben für mögliche Wischablauf-Kennlinienauslegungen.

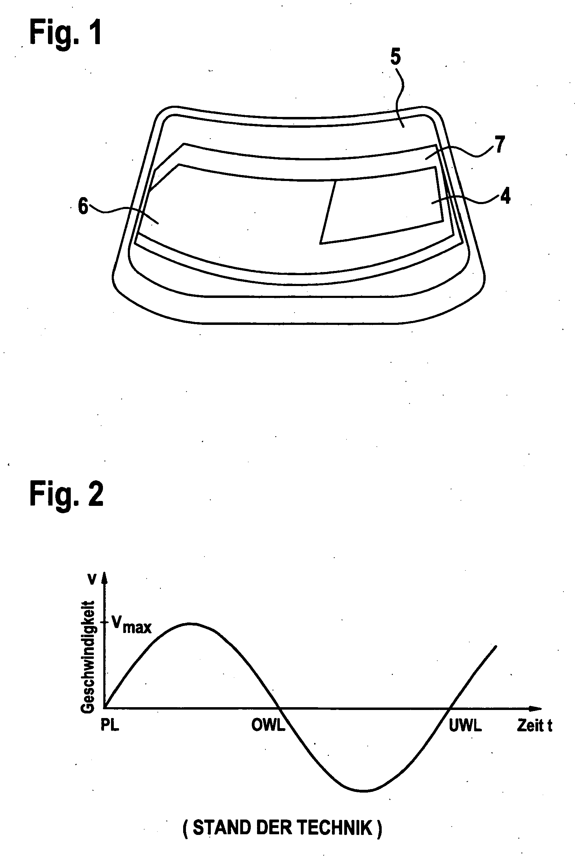

Figur 1 zeigt eine Windschutzscheibe 5, auf deren Fläche die nach einer gesetzlichen Vorschrift (SAE) definierten, drei verschiedenen Sichtfelder 4, 6 und 7 dargestellt sind. Das für den Fahrer offensichtlich wichtigste Sichtfeld 4 wird im folgenden als Hauptsichtfeld 4 bezeichnet.

In Figur 2 ist eine aus dem Stand der Technik bekannte sinusförmige Wischverlaufs-Kennlinie als v-t-Diagramm dargestellt. Dieser in der Steuerung gespeicherte Sollverlauf wird im Wischbetrieb eingesetzt, um einen Reversiermotor anzusteuern. Dieser beschleunigt demnach den jeweiligen Wischhebel zunächst aus der Parklage (PL) bis zu einer maximalen Wischge-schwindigkeit Vₘₐₓ, die der Wischer genau in der Mitte zwischen der Parklage und der oberen Wendelage (OWL) erreicht. Danach beginnt bereits wieder die Abbremsung, die ihr Ende findet, wenn der Wischer die obere Umkehrlage (OWL) erreicht. Damit ist die erste Hälfte des Wischzyklus, das Aufwärtswischen, beendet. Der Motor reversiert in OWL und der Wischer wird zum Abwärtswischen beschleunigt, bis er, wieder mittig zwischen OWL und der unteren Umkehrlage (UWL), wiederum Vₘₐₓ erreicht, um danach abzubremsen und den Wischzyklus mit Erreichen von UWL zu beenden.

Der in Figur 2 dargestellte, bezüglich der Umkehrlagen symmetrische bekannte Wischverlauf v(t) stellt im Hinblick auf einen harmonischen und materialschonenden Bewegungsablauf das Optimum dar. Soll jedoch eine verbesserte Wischerverfügbarkeit ohne Wischfrequenzerhöhung realisiert werden, so ist eine genauere Analyse der Situation erforderlich.

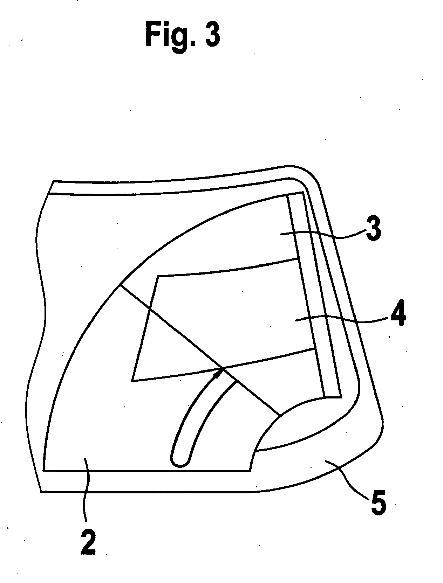

Die Analyse einer Wischperiode unter objektiven und subjektiven Gesichtspunkten ergibt zwei wichtige Faktoren: die zeitliche Verfügbarkeit in einem bevorzugten Wischfeldbereich und die Wartezeit, während der sich der Wischer außerhalb dieses Bereiches befindet. In den folgenden Betrachtungen wird das Wischfeld geometrisch in zwei Hälften zu jeweils etwa 50 % aufgeteilt, vergleiche Figur 3, in ein so genanntes direktes Fahrerwischfeld 1 (das im Wesentlichen das Wischfeld im Bereich des gesetzlichen Hauptsichtfeldes 4 nach SAE abdeckt) und der verbleibenden Restfläche 2 von fünfzig Prozent, die unterhalb des oberen Segmentes 1 des Wischfeldes bis zur Parklage des Wischers angeordnet ist.

zeitliche Verfügbarkeit:
die Verweildauer des Wischers im direkten Fahrerwischfeld 1 wird im Folgenden die zeitliche Verfügbarkeit genannt. Je höher die Wischfrequenz, desto geringer die relative zeitliche Verfügbarkeit während einer Wischperiode. Da sich allerdings mit steigender Wischfrequenz die Anzahl der Wischperioden erhöht, ergibt sich - bei symmetrischem Wischverlauf - eine absolute zeitliche Verfügbarkeit, die unabhängig von der Wischfrequenz und damit immer konstant ist. Aufgrund des erfindungsgemäß asymmetrischen bzw. verschobenen Wischverlaufs mit reduzierter Wischgeschwindigkeit im direkten Fahrerwischfeld 1 resultiert dort allerdings eine Erhöhung der zeitlichen Verfügbarkeit.

Wartezeit:
mit der Wartezeit wird derjenige Zeitraum beschrieben, während dem sich der Wischer außerhalb des direkten Fahrerwischfeldes 1 befindet, d.h. der Wischer sich im 50% Restwischfeld 2 abwärts und wieder aufwärts bewegt, bis er wieder in das direkte Fahrerwischfeld 1 gelangt. Durch Erhöhung der absoluten Wischfrequenz ließe sich natürlich auch die Wartezeit verringern. Es besteht ein linearer Zusammenhang zwischen der Erhöhung der Wischfrequenz und der Verkürzung der Wartezeit (Beispiel für typische Wartezeiten: in Stufe I bei 42 U/min: 714 ms, in Stufe II bei 63 U/min: 475 ms).

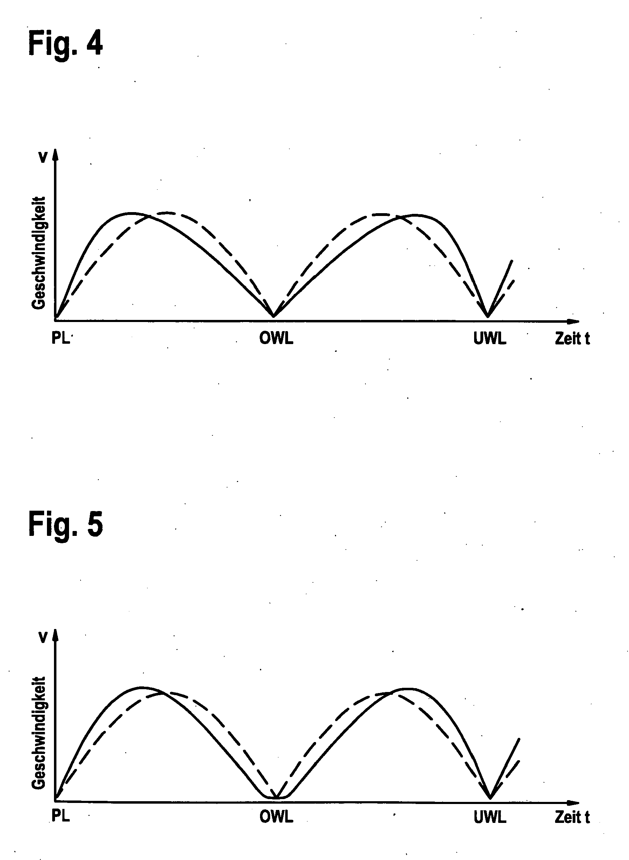

Erfindungsgemäß kann die Verkürzung der Wartezeit bei elektronisch gesteuerten/geregelten Wischermotoren auch ohne Erhöhung oder sogar bei Verringerung der Wischfrequenz erzielt werden, nämlich durch Reduzierung der Wischergeschwindigkeit innerhalb des direkten Fahrerwischfelds 1 bei gleichzeitiger Erhöhung der Wischergeschwindigkeit außerhalb des direkten Fahrerwischfelds 1. Es ergibt sich ein Wischverlauf, bei dem die Maxima nicht in der Mitte zwischen den Umkehrlagen angeordnet sind, vergleiche Figur 2, sondern zur unteren Umkehrlage (UWL) hin verschoben sind, vergleiche Figur 4. (Der bekannte symmetrische Wischverlauf ist zum Vergleich gestrichelt eingezeichnet) Durch die Reduzierung der Wischergeschwindigkeit innerhalb des direkten Fahrerwischfelds 1 ergeben sich neben der Reduzierung der Wartezeit weitere Vorteile:
Einerseits wird gleichzeitig die zeitliche Verfügbarkeit gesteigert. Die Wischqualität im direkten Fahrerwischfeld 1 wird verbessert. Zusätzlich wird in der oberen Umkehrlage das Umlege-Geräusch reduziert. Die Tendenz zum Überwischen im Bereich der A- Säule wird verringert (bzw. die Regelung zur Vermeidung des Überwischens kann vereinfacht werden). Durch Vermeidung von zusätzlichen Reversiervorgängen wird schließlich die Temperaturentwicklung des bevorzugt als Antrieb eingesetzten Reversiermotors günstig beeinflusst.

Das direkte Fahrerwischfeld 1 wird zwangsläufig zweimal nacheinander gewischt, einmal beim Aufwärtswischen und sofort wieder beim darauf folgenden Abwärtswischen. Danach entsteht eine vergleichsweise lange Wartezeit. Deshalb kann es Sinn machen, neben der Reduzierung der Wischergeschwindigkeit innerhalb des direkten Fahrerwischfelds 1, eine zusätzliche Haltezeit in der oberen Umkehrlage 3, vergleiche Figur 3, einzuführen. Damit wird zwar die Wartezeit nicht verringert, aber die Verfügbarkeit bzw. Verweildauer des Wischers im direkten Fahrerwischfeld 1 erhöht, womit der Wischvorgang insgesamt deutlich harmonischer abläuft. Ein Geschwindigkeits-Diagramm v(t) mit Haltezeit in der oberen Wendelage ist in Figur 5 dargestellt. Bei der Einführung der Haltezeit ist allerdings zu beachten, dass die Zeitdauer für einen kompletten Wischzyklus erhöht wird, was durch die Erhöhung der absoluten Wischgeschwindigkeit kompensiert werden muss, falls dieselbe effektive Zyklenzahl beibehalten werden soll.

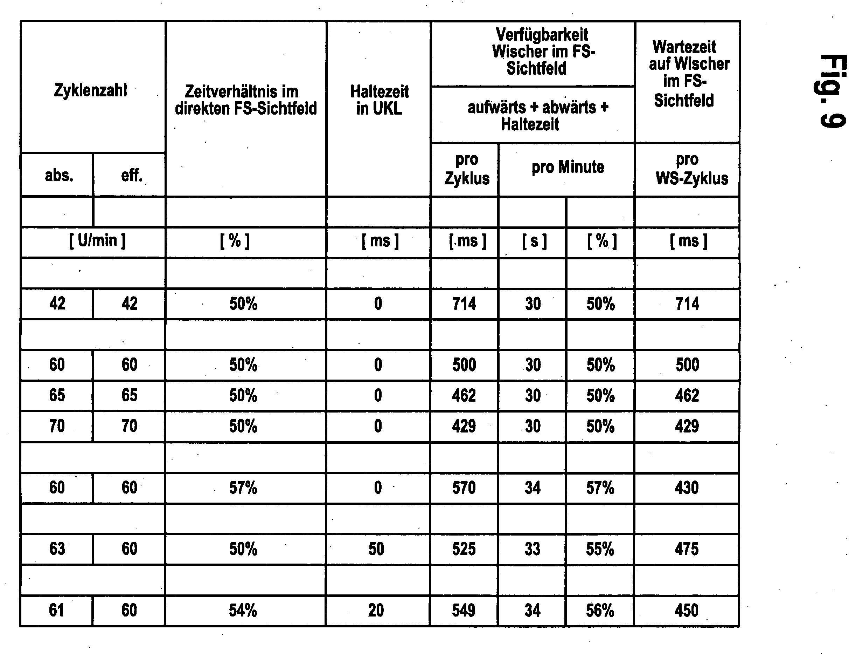

Figur 9 zeigt eine Tabelle mit einer Übersicht über Beispiele für die Wahl von Zeiten, die für mögliche Kennlinienauslegungen zur Steuerung des Wischablaufs in Frage kommen.

Die beschriebene Auslegung der Motor-Charakteristik mit Reduzierung der Wischergeschwindigkeit innerhalb des direkten Fahrerwischfelds 1 und der zusätzlichen Haltezeit ist insbesondere für die (Dauerbetriebs-) Stufe II geeignet. Daher ist für die Stufe I gegebenenfalls eine andere Motor-Kennlinie zu wählen. Bei spezieller Auslegung des Intervallwischablaufs' (z. B. mit verzögerter Intervallumkehrlage oder zwei Intervallparklagen) sind somit mehrere unterschiedliche Kennlinien zielführend.

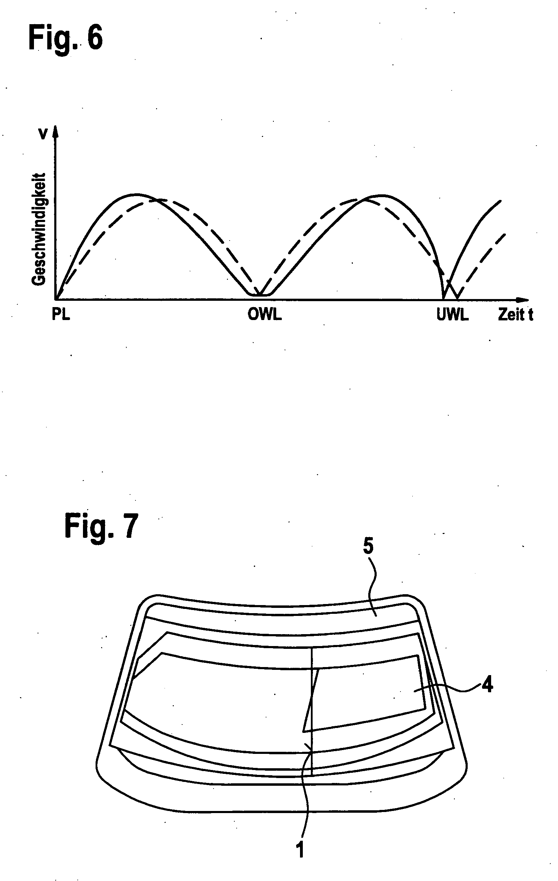

Weiterhin ist die Kombination der genannten Auslegungen mit der schon heute angewandten Variation der unteren Umkehrlagen (nahe der Parklage) möglich. So wird in Intervallparklage höher abgelegt als in der EPS (erweiterten Parkstellung) und in Stufe I und Stufe II jeweils noch weiter von der Parklage entfernt umgekehrt. Damit lassen sich die Wartezeiten weiter verkürzen. Die Reduzierung des Wischwinkels in der unteren Wendelage (UWL) zur zusätzlichen Wartezeit-Verkürzung ist in Figur 6 dargestellt.

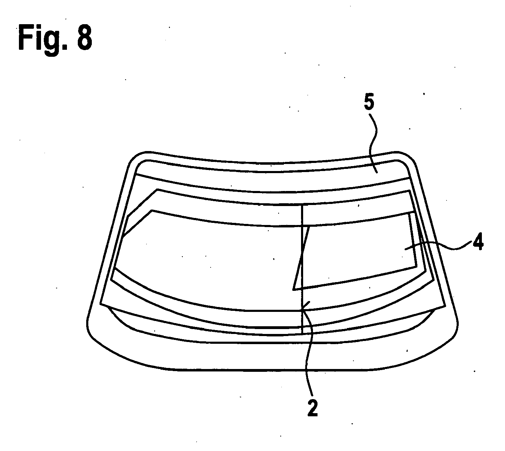

Die Erfindung ist mit besonderem Vorteil bei einem gleichlaufenden Wischsystem anwendbar, dessen zwei Wischer von einem Reversiermotor angetrieben werden. Die primär für den fahrerseitigen Wischer erzeugte verbesserte Wischerverfügbarkeit überträgt sich dann natürlich auch auf den BS-Wischer. Grundsätzlich ist auch für elektronisch geregelte Rundläufermotoren die beschriebene Geschwindigkeits- Charakteristik anwendbar. Außerdem ist die erfindungsgemäße Auslegung mit unsymmetrischem Wischablauf für einen Linearwischer besonders geeignet, insbesondere wenn dieser als Einhebelwischer ausgeführt wird. Der Wischer muss dann große Strecken zurücklegen, woraus eine lange Wartezeit resultiert, die jedoch reduziert werden kann, womit die immer wieder diskutierte Linearwischeranlage realisiert werden könnte. Figur 7 zeigt die Reduzierung der Wischergeschwindigkeit innerhalb des direkten Fahrerwischfelds 1 bei einem sich horizontal über die Scheibe 5 bewegenden Einhebelwischer, während Figur 8 die Erhöhung im außerhalb des Bereichs 1 angeordneten Restwischfeld 2 andeutet.

Beim Dauer-Wischbetrieb in der schnellen Stufe II wird dem Fahrer demnach gemäß der Erfindung bei viel Niederschlag ein gleichmäßiger Reinigungszustand bei verbesserter Reinigung der Fahrzeugfrontscheibe geboten. Insgesamt wird so eine Verbesserung der Sichtverhältnisse und daraus resultierend eine höhere Fahrsicherheit erzielt.

Im Vergleich zum bisherigen Vorgehen, der Erhöhung der Wischzyklenanzahl pro Minute, wird gleichzeitig das Wischsystem geschont und die Temperaturentwicklung des Motors reduziert. Die für Reversiermotoren ungünstige Wischzyklenanzahl-Steigerung kann vermieden werden. Alle durch eine Wischzyklenanzahl-Erhöhung entstehenden Nachteile werden vermieden.

Bei Wischermotoren mit integrierter Elektronik (insbesondere Reversiermotoren) ist die Programmierung der beschriebenen Ablauf-Charakteristiken problemlos möglich und softwaretechnisch umsetzbar. Der gewünschte Ablauf, der den gewünschten Wischverlauf v(t) hervorbringt, ist durch vergleichsweise kleine Modifikationen (wenige Prozent, vergleiche Beispiele) heute verwendeter Steuerkennlinien einzustellen.

Die Umsetzung im Produkt kann demnach ohne zusätzliche Hardware kostengünstig realisiert werden. Weitere Kosteneinsparpotentiale ergeben sich dadurch, dass großzügig dimensionierte Lagerstellen am Wischerantrieb sowie den Wischhebeln vermieden werden. Sowohl die dynamische Belastung der Wischsystems während eines Umkehrvorgangs als auch die Anzahl der Lastwechsel über die gesamte Lebensdauer wird erheblich reduziert.

Außerdem können Wischsysteme in Einzelfällen mit kleineren Wischermotoren betrieben werden, da die Temperaturentwicklung bei kleinerer Anzahl von Wischperioden bzw. weniger Reversiervorgängen pro Minute reduziert wird.

## Patentansprüche

1. Linearwischeranlage für ein Kraftfahrzeug, mit einem Einhebelwischer, der von einem Motor horizontal auf der Windschutzscheibe (5) zwischen einer fahrerseitigen und einer beifahrerseitigen Umkehrlage hin- und herbewegbar ist, wobei mittels einer elektronische Steuerung ein pendelnder Wischverlauf mit einer zeitabhängigen Wischgeschwindigkeit der Wischer gemäß einer glatten periodischen Funktion v(t), die zwischen den Umkehrlagen jeweils ein Maximum aufweist, vorgebbar ist, **dadurch gekennzeichnet, daß** für den Wischer ein Wischverlauf v(t) vorgebbar ist, dessen Maxima näher zur beifahrerseitigen als zur fahrerseitigen Umkehrlage liegen, so dass der Wischer - bei höchstens gleichbleibender Wischfrequenz - ein vorgebbares fahrerseitiges Segment (1) des Wischfeldes langsamer und das restliche Wischfeld (2) schneller als bei einem bezüglich der Umkehrlagen symmetrischen Wischverlauf durchläuft.

2. Linearwischeranlage nach Anspruch 7, **dadurch gekennzeichnet, dass** der Wischer von einem Rundläufermotor antreibbar ist.

## Claims

1. Linear wiper system for a motor vehicle, with a single-arm wiper which is movable to and fro horizontally on the windscreen (5) between a reversal position on the driver's side and on the passenger's side, wherein an oscillating wiping profile with a time-dependent wiping speed of the wipers in accordance with a smooth periodic function v(t), which is in each case at maximum between the reversal positions, can be specified by means of an electronic control, **characterized in that** a wiping profile v(t), the maxima of which lie closer to the reversal position on the passenger's side than on the driver's side, can be specified for the wiper, and therefore the wiper - with the wiping frequency remaining extremely consistent - passes through a specifiable segment (1) of the driver's side of the wiping area more slowly and through the remaining wiping area (2) more rapidly than in the case of a wiping profile which is symmetrical with respect to the reversal position.

2. Liner wiper system according to Claim 1, **characterized in that** the wiper can be driven by a rotary motor.

## Revendications

1. Ensemble d'essuie-glace linéaire pour un véhicule automobile, avec un essuie-glace à un seul levier, qui peut être déplacé horizontalement en mouvement réciproque par un moteur sur le pare-brise (5) entre une position d'inversion côté conducteur et une position d'inversion côté passager, dans lequel une courbe alternée de balayage peut être prédéterminée au moyen d'une commande électronique, avec une vitesse de balayage de l'essuie-glace dépendant du temps selon une fonction périodique lisse v(t), qui présente chaque fois un maximum entre les positions d'inversion, **caractérisé en ce qu'**une courbe de balayage v(t) pour l'essuie-glace peut être prédéterminée, dont les maxima sont plus proches de la position d'inversion côté passager que de la position d'inversion côté conducteur, de telle manière que l'essuie-glace - à une fréquence de balayage restant au maximum constante - parcoure plus lentement un segment prévisible côté conducteur (1) du champ de balayage et plus rapidement le reste du champ de balayage (2) qu'avec une courbe de balayage symétrique par rapport aux positions d'inversion.

2. Ensemble d'essuie-glace linéaire selon la revendication 1, **caractérisé en ce que** l'essuie-glace peut être entraîné par un moteur à rotor tournant.
